## Europäisches Patentamt
## European Patent Office
## Office européen des brevets

(19)

(11) Numéro de publication: **0 015 855**
**B1**

(12)

# FASCICULE DE BREVET EUROPEEN

(45) Date de publication du fascicule du brevet:
**23.02.83**

(51) Int. Cl.³: **A 21 C 5/04,** G 01 F 11/02

(21) Numéro de dépôt: **80420020.2**

(22) Date de dépôt: **15.02.80**

(54) **Perfectionnements aux diviseuses volumétriques de matières pâteuses.**

(30) Priorité: **16.02.79 FR 7904491**

(43) Date de publication de la demande:
**17.09.80 Bulletin 80/19**

(45) Mention de la délivrance du brevet:
**23.02.83 Bulletin 83/8**

(84) Etats contractants désignés:
**AT BE CH GB IT LU NL SE**

(56) Documents cités:
**DE-C-384 269**
**FR-A-1 266 819**
**GB-A-3 877**
**US-A-1 861 734**
**US-A-2 162 641**
**US-A-3 504 639**

(73) Titulaire: **Locolas, Claude, "Le Cormoran B" 36, rue Barnave, F-26000 Valence (FR)**

(72) Inventeur: **Locolas, Claude, "Le Cormoran B" 36, rue Barnave, F-26000 Valence (FR)**

(74) Mandataire: **Schmitt, John, 9 Rue Pizay, F-69001 - Lyon (FR)**

ACTORUM AG

## Perfectionnements aux diviseuses volumétriques de matières pâteuses.

La présente invention se rapporte aux diviseuses volumétriques et automatiques pour toute matière pâteuse, pulvérulente ou semi-liquide, mais plus particulièrement pour la pâte à pain, du genre de celles comprenant une trémie étanche de stockage sous pression de la pâte qui communique avec un distributeur rotatif constitué par un rotor tournant dans un carter cylindrique fixe et entraîné par un motoréducteur, ledit carter comportant une ouverture pour l'évacuation des pâtons et le rotor étant creusé d'au moins un alésage diamétral contenant un piston libre à double effet dont le mouvement alternatif permet d'un côté l'admission d'une quantité déterminée de pâte et de l'autre l'éjection d'un pâton précédemment admis.

Par le brevet FR-A-1 266 819 on connaît une diviseuse de masses pâteuses du genre susmentionné comprenant deux cylindres situés de façon diamétralement opposée dans un rotor et dans chacun desquels est logé un piston. Les deux pistons sont reliés par une tige vissée dans les pistons par ses extrémités. Le volume des cylindres destinés à recevoir la pâte est déterminé par la variation de l'écartement des pistons, donc de leur course, qui est réglée par la rotation d'une vis sans fin mue par une transmission par volant à main et pignon. Ce système n'est pas rigoureusement volumétrique. Suivant la quantité de pâte stockée dans la trémie, le poids de la pâte aspirée et éjectée à chaque cycle reste variable dans de grandes proportions. D'autre part, l'ajustage du poids nominal s'effectue à l'aide de divers appareils additionnels ce qui constitue un ensemble compliqué. Des butées non réglables, fixées sur le rotor, limitent la course des pistons.

On connaît également le brevet FR-A-2 388 499 qui décrit une diviseuse pour matière pâteuse comportant un carter dans lequel tourne un rotor creusé d'un logement pour un piston lequel est relié à des moyens d'entraînement qui soumettent le piston à un déplacement alternatif complet pour chaque tour du rotor. Le dispositif étant muni de rampes et de galets qui transforment le mouvement rotatif du rotor en mouvement rectiligne du piston. Un autre document, US-A-2 162 641, similaire mais muni de plusieurs pistons, montre des pistons munis de gorges.

Ce système est assez complexe, son débit n'est pas d'une précision rigoureuse et son agencement mécanique est source de déréglage.

Enfin, on connaît le brevet FR-A-2 423 757, au nom du présent demandeur, qui propose une peseuse diviseuse volumétrique de pâte à pain du genre de celles susmentionnées et qui comporte un piston libre à deux têtes et des moyens de réglage du volume des pâtons constitués par un jeu de parallélogrammes déformables comportant chacun quatre biellettes accouplant les deux têtes opposées du piston à une vis de commande entraînée par un volant de manœuvre. Le carter cylindrique contenant le rotor est muni d'une butée fixe de limitation de course du piston. Jusqu'à présent cette peseuse est celle qui donne les meilleurs résultats et la présente invention a pour objet d'y apporter des perfectionnements pour en améliorer encore le fonctionnement et le rendement.

Un premier perfectionnement permet de vider entièrement la trémie et d'éviter qu'une quantité importante de pâte tourne sur elle-même dans la trémie ou y retourne, en intercalant, entre la trémie et le distributeur rotatif que constitue le rotor à piston libre, un réservoir de pâte communiquant avec ladite trémie par une ouverture d'un diamètre inférieur à celui du logement du piston.

Un autre perfectionnement consiste à diminuer les surfaces de frottement des pistons pour éliminer les risques de collage en creusant des gorges dans les têtes du piston.

Suivant un autre perfectionnement on peut purger rapidement l'air sous pression contenu dans la trémie en fin de pesée en pratiquant des rainures verticales dans les segments des têtes du piston.

Un autre perfectionnement permet d'obtenir un synchronisme parfait du réglage de l'écartement des pistons pour produire des pâtons rigoureusement identiques en accouplant les extrémités articulées des bielles des parallélogrammes par des engrenages. On élimine ainsi le jeu des biellettes et on stabilise le vérin dans son déplacement vertical.

Selon un autre perfectionnement on limite la course du piston, au moyen de butées filetées réglables par simple vissage et fixées sur des équerres faisant corps avec l'ensemble mobile.

Un autre perfectionnement permet d'ajuster le poids des pâtons en se reportant à des règles graduées devant lesquelles se déplacent des index solidaires des têtes du piston.

Suivant un autre perfectionnement on évite la sortie prématurée des pâtons lors de la rotation du rotor par l'utilisation d'un volet amovible monté à droite ou à gauche de l'ensemble, suivant le sens de rotation recherché, ce qui facilite l'implantation de la machine.

Un autre perfectionnement vise la possibilité de faire varier le volume des pâtons indépendamment du réglage de la course du piston en chemisant les cylindres et en remplaçant les pistons par d'autres aux dimensions des chemises.

Enfin, un autre perfectionnement consiste à permettre le basculement de la trémie en prévoyant, à la manière connue, une articulation, un système de blocage en position fermée et un joint d'étanchéité, entre la trémie et le réservoir de pâte.

Les dessins annexés qui montrent un exemple non limitatif d'éxécution de l'invention permettront de bien comprendre la description qui va suivre en s'y référant:

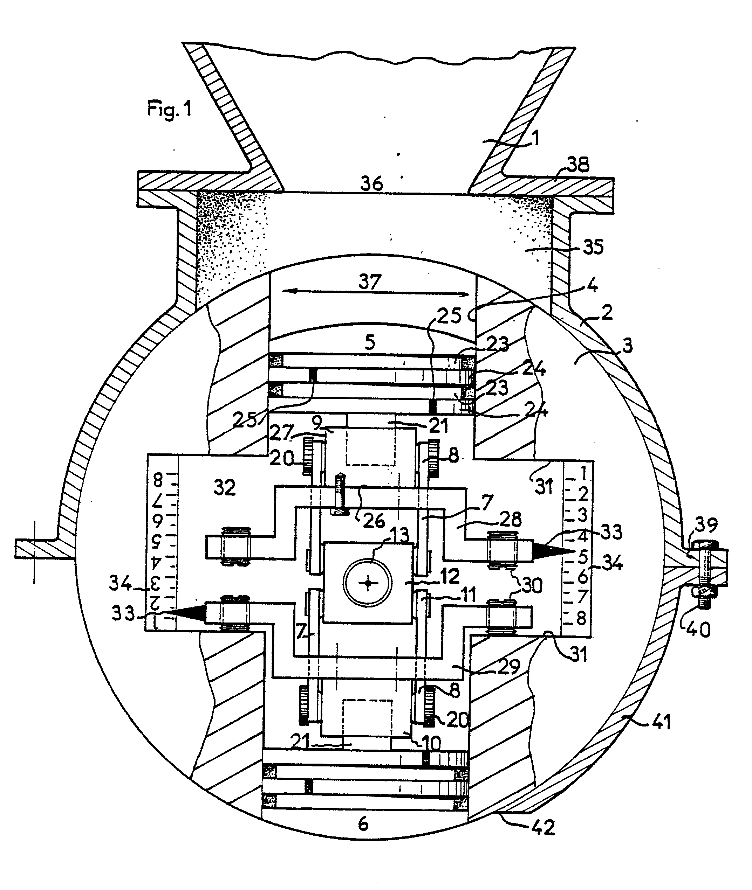

La fig. 1 est une vue en coupe d'élévation du distributeur rotatif d'une diviseuse volumétrique selon l'invention.

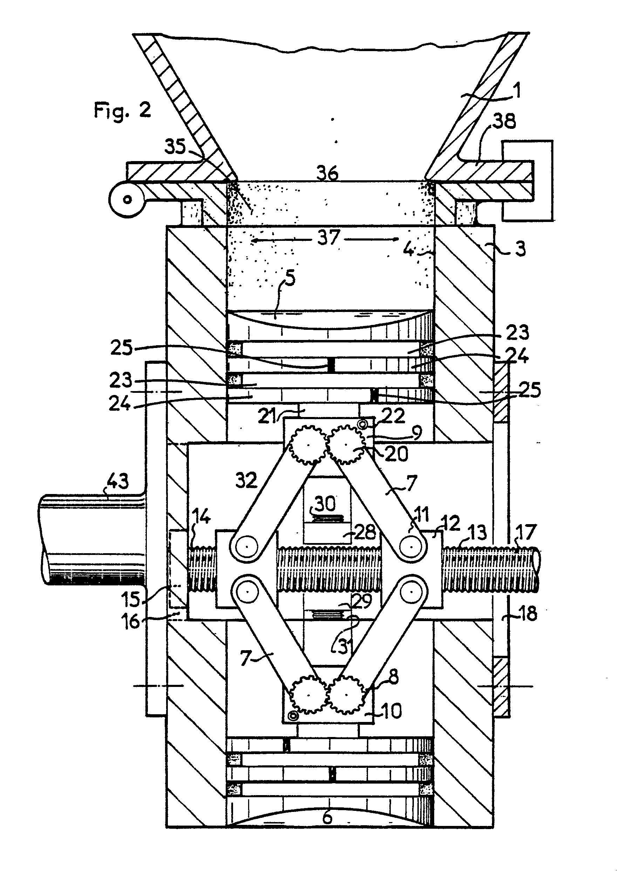

La fig. 2 en est une vue de côté en coupe. La diviseuse illustrée aux dessins comprend une trémie 1 rendue solidaire d'un distributeur rotatif comportant, à la manière connue, un carter cylindrique 2 dans lequel tourne un rotor 3 traversé par une ouverture cylindrique 4 dans laquelle est logé un piston à deux têtes 5, 6.

Les têtes 5, 6 du piston sont creusées chacune d'au moins deux gorges 23 qui forment des segments 24 creusés de rainures verticales 25.

Les deux têtes 5, 6 du piston sont accouplées par un jeu de deux parallélogrammes constitués chacun par quatre biellettes 7 elles-mêmes accouplées, par une de leurs extrémités 8, à des supports 9, 10 et, par leur autre extrémité 11, à des écrous 12 qui se déplacent sur une vis-mère 13 à pas contraires dont une extrémité 14 est prisonnière d'une noix 15 qui est susceptible de se mouvoir verticalement dans un logement borgne oblong 16 creusé dans la paroi de la face arrière du rotor, tandis que l'autre extrémité 17 de ladite vis-mère traverse la face avant du rotor et peut se déplacer verticalement dans une lumière oblongue 18 et recevoir extérieurement au rotor un volant de manœuvre non représenté.

Les extrémités 8 des biellettes 7 sont solidarisées deux par deux par des roues dentées 20 qui restent constamment engrenées.

Les supports 9–10 sont creusés d'un logement destiné à recevoir la tige 21 des têtes 5, 6 du piston qui y est engagée et bloquée par une vis transversale 22, qui permet le démontage et le remplacement des têtes du piston.

Chaque support 9–10 est équipé sous sa face inférieure 27 d'un porte-butée 28 ou 29 en forme d'équerre.

Les extrémités libres des porte-butées 28–29 sont équipées de butées constituées par des vis 30 dont l'extrémité prend appui contre une partie plane en saillie intérieure 31 du rotor pour limiter la course de tout l'ensemble mobile.

Dans une variante de réalisation on peut prévoir un porte-butée en deux parties fixé contre les faces latérales 27 des supports 9–10.

Le rotor 3 est creusé axialement d'une cavité 32 parallélépipédique dans laquelle débouche le logement cylindrique 4 du piston 5–6. C'est grâce à cette cavité que peuvent se déplacer les porte-butées 28–29 solidaires des supports 9–10 des têtes 5–6 du piston et c'est contre les parois en vis-à-vis 31 que viennent buter les vis respectives 30 des porte-butées 28–29 pour limiter la course alternative du piston.

Une des extrémités de chaque équerre porte-butée 28–29 est équipée d'un index horizontal 33 qui la prolonge et se déplace devant une règle graduée 34 fixée sur la face extérieure du rotor 3 au droit des côtés latéraux de la cavité.

Le carter cylindrique 2 qui entoure le rotor 3 forme un réservoir de pâte 35 sur lequel est bridée la trémie 1.

L'ouverture de communication 36 entre le réservoir 35 et la trémie 1 présente un diamètre inférieur à celui 37 du logement cylindrique 4 creusé dans le rotor 3.

Ce réservoir 35 est d'une forme oblongue largement dimensionnée dans le sens de la longueur. Dans le sens de la profondeur il n'excède pas le diamètre des têtes de piston 5, 6. Dans le sens de la hauteur sa dimension reste égale à la moitié du diamètre des têtes du piston. La capacité de ce réservoir est de l'ordre de plusieurs kilos de pâte à pain.

La trémie 1 est encastrée par sa base conique dans une bride 38 percée de l'ouverture circulaire 36. Cette bride est de même forme et dimensions que la partie supérieure du réservoir 35 qu'elle vient coiffer en s'articulant à son arrière par des charnières et en se bloquant à l'avant au moyen d'un verrouillage approprié avec interposition d'un joint d'étanchéité périphérique. Ces derniers éléments n'étant pas représentés sur les figures.

Le carter 2 enveloppe partiellement le rotor 3. Il comporte de chaque côté une bride 39 qui permet la fixation par boulons 40 d'un volet amovible 41 de même forme concave que le reste du carter et qui se termine par une partie tranchante 42. Ce volet se monte sur les bossages 39 d'un côté seulement, à droite ou à gauche, en fonction de l'implantation de la machine dans son lieu de travail.

Le rotor 3 comporte sur une face un arbre 43 d'entraînement en rotation accouplé à un motoréducteur non représenté.

Le fonctionnement de la diviseuse selon l'invention est très simple: la pâte stockée dans la trémie 1 est répartie dans le récipient 35 par pression constante formant ainsi un tampon homogène qui ne subit pas les mouvements internes dus aux frottements du rotor 3, en l'absence de ce réservoir tampon 35, une importante quantité de pâte tourne sur elle-même et des irrégularités de poids en résultent.

Cette disposition permet donc de pallier cet inconvénient et de vider complètement la trémie 1, elle interdit tout retour de la pâte dans la trémie et assure une descente régulière dans le rotor, quelle que soit la densité de la pâte.

L'utilisateur ayant déterminé le volume des pâtons à produire, règle la course du piston en manœuvrant le volant qui entraîne en rotation la vis-mère 13 sur laquelle se déplacent les écrous 12 du parallélogramme déformable.

Selon le mouvement imprimé à la vis, les écrous 12 se rapprochent ou s'éloignent l'un de l'autre entraînant par l'intermédiaire des biellettes 7 l'écartement ou le rapprochement des deux têtes 5–6 du piston, provoquant une diminution ou une augmentation de la cavité d'admission de la pâte située entre le réservoir 35 et alternativement chaque tête 5–6 du piston.

Lorsque la course désirée pour le piston est repérée sur les règles graduées 34, l'utilisateur bloque les vis 30 dans leur porte-butées 28–29 de manière à avoir une limitation constante et précise de la course du piston pendant toute l'opération dont il va programmer le nombre de pâtons.

La machine mise en route, le rotor 2 commence sa rotation à l'intérieur du carter 3. La pâte stockée dans le réservoir 35 est poussée dans la cavité 4 par celle sous pression issue de la trémie 1. Chaque fois qu'un des logements cylindriques du rotor 3 vient au droit du récipient 35 la pâte s'y précipite en refoulant la tête 5 ou 6 du piston qui s'y trouve. Le rotor continue sa rotation d'un demi-tour, à ce moment le pâton formé initialement se trouve en bas de la machine et est éjecté par la pesée du piston qui vient à nouveau d'être refoulé par la pâte qui remplit la cavité supérieure et opposée du cylindre.

## Revendications

1. Diviseuse volumétrique et automatique de matière pâteuse, notamment de pâte à pain, comprenant une trémie étanche (1) de stockage sous pression de la pâte qui communique avec un distributeur rotatif constitué par un rotor (3) tournant dans un carter cylindrique (2) fixe et entraîné par un motoréducteur, ledit carter (2) comprenant une ouverture à sa base pour l'évacuation des pâtons, ledit rotor (3) étant creusé d'au moins un alésage diamétral (4) contenant un piston libre se composant de deux têtes opposées (5, 6) munies de gorges (23), qui forment entre elles des segments (24), ces têtes (5, 6) étant accouplées l'une à l'autre par un jeu de biellettes (7) formant un ou des parallélogrammes déformables, deux sommets opposés (8) du ou des parallélogrammes étant articulés respectivement sur les têtes de piston (5, 6), les deux autres sommets (11) s'articulant sur des écrous 12 à pas contraires placés sur une vis (13) munie de filetages opposés et servant ainsi à régler l'écartement des têtes (5, 6). Le mouvement alternatif du piston, limité par des butées (28–31), permet tant d'un côté l'admission d'une quantité déterminée de pâte et de l'autre l'éjection d'un pâton précédemment admis, caractérisée par le fait que le carter (2) comporte une partie formant réservoir-tampon de pâte (35) intercalée entre la trémie de stockage (1) et le rotor (3); que les segments (24) délimités par les gorges (23) sont creusés de rainures (25) destinées à purger l'air; que les biellettes (7) des parallélogrammes de réglage de l'écartement des têtes (5, 6) du piston ont leurs extrémités (8) articulées sur les têtes de piston, qui sont stabilisées sur chaque tête par des roues dentées mutuellement engrenées (20); que le ou les parties (28–30) du piston, servant de butées de limitation de course, portent un index (33) se déplaçant devant une ou des règles graduées (34) solidaires du rotor pour visualiser ladite course et qu'un volet amovible (41) équipe partiellement le carter (2) sur sa partie inférieure pour éviter la sortie prématurée des pâtons.

2. Diviseuse suivant la revendication 1, caractérisée par le fait que le réservoir de pâte (35) intercalé entre la trémie (1) et le distributeur (3) est de forme oblongue, largement dimensionnée dans le sens de la longueur, et sa profondeur n'excède pas le diamètre du piston tandis que sa hauteur reste égale à la moitié du diamètre des têtes (5, 6).

3. Diviseuse suivant la revendication 1, caractérisée par le fait que les rainures (25) de purge d'air sont creusées sur la périphérie des segments (24), dans le sens de l'axe du piston.

4. Diviseuse suivant la revendication 1, caractérisée par le fait que les biellettes (7) des parallélogrammes déformables qui accouplent les têtes (5, 6) du piston sont articulées par leur extrémité (8) à des supports (9, 10), dans lesquels sont logées des tiges (21) des têtes (5, 6) du piston.

5. Diviseuse suivant les revendications 1 et 4, caractérisée par le fait que les roues dentées (20) sont axées avec les extrémités (8) des biellettes (7) sur les supports (9, 10) des tiges (21) des têtes du piston.

6. Diviseuse suivant la revendication 4, caractérisée par le fait que les tiges (21) des têtes (5, 6) du piston sont retenues dans leurs supports respectifs (9, 10) par des vis (22).

7. Diviseuse suivant les revendications 1 et 4, caractérisées par le fait que les parties (28–30) du piston, servant de butées, sont constituées par les porte-butées (28, 29) respectivement fixés aux supports (9, 10) et munis d'une vis de réglage (30) qui vient prendre appui contre la paroi interne plane (31) d'une cavité (32) prévue dans le rotor (3).

8. Diviseuse suivant la revendication 1, caractérisée par le fait que les règles graduées (34), devant lesquelles se déplacent les index (33), sont fixées contre la face avant plane du rotor (3).

9. Diviseuse suivant la revendication 1, caractérisée par le fait que le volet (41) est fixé à une bride (39) par boulons (40) sur l'un ou l'autre côté de la base inférieure cylindrique du carter (2).

## Patentansprüche

1. Volumetrische und automatische Aufteilmaschine für teigförmige Stoffe, insbesondere für Brotteig, mit einem dichten Vorratsbehälter (1) zur Lagerung des Teiges unter Druck, welcher mit einem drehenden Verteiler in Verbindung steht, der sich aus einem in einem festen zylindrischen Gehäuse (2) drehenden Rotor (3) zusammensetzt und durch einen Getriebemotor angetrieben wird, wobei das Gehäuse (2) am unteren Teil mit einer Öffnung zur Entfernung der Teigknoten versehen ist, wobei dieser Rotor (3) mindestens mit einer diametralen Bohrung (4) versehen ist, die einen freilaufenden Kolben, bestehend aus 2 entgegengesetzten Köpfen (5, 6) mit Nuten (23), die untereinander Ringe (24) bilden, enthält, wobei diese Köpfe (5, 6) durch einen Satz von Gelenkstangen (7), die einen oder mehrere verformbare Parallelogramme bilden, miteinander verbunden sind, wobei zwei gegenüberliegende Spitzen (8) des bzw. der Parallelogramme jeweils gelenkartig an den Kolbenköpfen (5, 6) angeschlossen sind, wobei die beiden anderen Spitzen (11) an Muttern (12) mit entgegengesetzten Schritten angeschlossen sind, die sich auf eine Schraube (13) mit entgegengesetzten Gewinden befinden und auf diese Weise zur Einstellung des Abstandes der Kolbenköpfe (5, 5) dienen, wobei die durch Anschläge (28, 31) begrenzte Umkehrbewegung des Kolbens an der einen Seite den Einlass einer vorbestimmten Teigmenge und an der anderen Seite den Auslass eines vorher eingelassenen Teigknotens erlaubt, dadurch gekennzeichnet, dass das Gehäuse (2) einen Teil umfasst, der einen zwischen dem Vorratsbehälter (1) und dem Rotor (3) liegenden Teigspeicherbehälter (35) bildet, dass die durch die Nuten (23) begrenzten Ringe (24) mit Rillen (25) zur Entlüftung versehen sind, dass die Gelenkstangen (7) der Parallelogramme zur Einstellung des Abstandes der Kolbenköpfe (5, 6) an ihren Endstellen (8) an den Kolbenköpfen angeschlossen sind, wobei diese an jedem Kopf durch ineinandergreifende Zahnräder (20) stabilisiert sind, dass der oder die Teile (28–30) des Kolbens, die als Anschläge zur Begrenzung der Bewegung dienen, einen Anzeiger (33) tragen, welcher sich vor einem oder mehreren am Rotor angeschlossenen Messstäben (34) bewegt, um die Bewegung anzuzeigen, und dass das Gehäuse (2) am unteren Teil teilweise mit einer abnehmbaren Klappe (41) versehen ist, um einen frühzeitigen Auslass der Teigknoten zu vermeiden.

2. Aufteilmaschine gemäss dem Patentanspruch 1, dadurch gekennzeichnet, dass der zwischen dem Vorratsbehälter 1 und dem Verteiler (3) gelegene Teigspeicherbehälter (35) eine der Länge nach reichlich bemessene längliche Form besitzt und dass seine Tiefe nicht den Durchmesser des Kolbens überschreitet, während seine Höhe der Hälfte des Durchmessers der Kolbenköpfe (5, 6) entspricht.

3. Aufteilmaschine gemäss dem Patentanspruch 1, dadurch gekennzeichnet, dass sich die Rillen (25) zur Entlüftung am Umfang der Ringe (24) in Richtung der Kolbenachse befinden.

4. Aufteilmaschine gemäss dem Patentanspruch 1, dadurch gekennzeichnet, dass die Gelenkstangen (7) der verformbaren Parallelogramme, die an den Kolbenköpfen (5, 6) angeschlossen sind, an ihren Endstellen (8) gelenkartig an Stützen (9, 10) angeschlossen sind, in welchen die Stangen 21 der Kolbenköpfe (5, 6) untergebracht sind.

5. Aufteilmaschine gemäss den Patentansprüchen 1 und 4, dadurch gekennzeichnet, dass die Zahnräder (20) mit den Endstellen (8) der Gelenkstangen (7) an den Stützen (9, 10) der Stangen (21) der Kolbenköpfe als Achse angeschlossen sind.

6. Aufteilmaschine gemäss dem Patentanspruch 4, dadurch gekennzeichnet, dass die Stangen (21) der Kolbenköpfe (5, 6) in ihren entsprechenden Halterungen (9, 10) durch Schrauben (22) befestigt sind.

7. Aufteilmaschine gemäss den Patentansprüchen 1 und 4, dadurch gekennzeichnet, dass die Teile (28–30) des Kolbens, die als Anschläge dienen, aus Anschlagträgern (28, 29) bestehen, die jeweils an den Stützen (9) und (10) befestigt sind, und die mit einer Einstellschraube (30), die sich gegen die ebene Wand (31) einer im Rotor (3) vorgesehenen Aushöhlung (32) abstützt, versehen ist.

8. Aufteilmaschine gemäss dem Patentanspruch 1, dadurch gekennzeichnet, dass die Messstäbe (34), vor welchen sich die Anzeiger (33) bewegen, an der vorderen flachen Fläche des Rotors (3) befestigt sind.

9. Aufteilmaschine gemäss dem Patentanspruch 1, dadurch gekennzeichnet, dass die Klappe (41) mit Schrauben (40) an einem Flansch (39) an der einen oder an der anderen Seite des unteren zylindrischen Teiles des Gehäuses (2) angeschlossen ist.

## Claims

1. A volumetric and automatic divider for pasty materials, more especially dough for bread, comprising a sealed hopper (1) for storing the dough under pressure which communicates with a rotary distributor formed by a rotor (3) rotating in a cylindrical fixed casing (2) and driven by a powered reduction gear, said casing (2) comprising an opening at its base for discharging the balls of dough, said rotor (3) comprising at least one diametrical bore (4) containing a free piston formed of two opposite heads (5, 6) provided with grooves (23) which form therebetween segments (24), these heads (5, 6) being coupled together by a set of links (7) forming one or more deformable pallelograms, two opposite apexes (8) of the parallelogram(s) being articulated respectively to the piston heads (5, 6) the other two apexes (11) being articulated to opposite pitch nuts (12) placed on a screw (13) having opposite threads and thus serving for adjusting the spacing between the heads (5, 6) the reciprocating movement of the piston limited by stops (28, 31) allowing, on the one hand, admission of a given amount of dough and, on the other, the ejection of a previously admitted dough ball, characterized by the fact that the casing (2) comprises a part forming a dough buffer-reservoir (35) inserted between the storage hopper (1) and the rotor (3); that the segments (24) defined by the grooves (23) comprise furrows (25) for bleeding the air; that the links (7) of the parallelograms for adjusting the spacing between the heads (5, 6) of the piston have their ends (8) articulated to the heads of the piston, which are stabilized on each head, by means of meshing gears (20); that the part(s) (28–30) of the piston, serving as travel limiting stops carry a pointer (33) moving past one or more graduated strips integral with the rotor so as to visualize said travel and that a movable flap (41) partially equips the casing (2) on its lower part so as to avoid premature discharge of the dough balls.

2. The divider according to claim 1, characterized by the fact that the dough reservoir (35) inserted between the hopper (1) and the distributor (3) is oblong in shape, amply dimensioned in the length direction and its depth does not exceed the diameter of the piston whereas it height remains equal to half of the diameter of the heads (5, 6).

3. The divider according to claim 1, characterized by the fact that the air bleed furrows (25) are formed in the periphery of the segments (24) in the direction of the axis of the piston.

4. The divider according to claim 1, characterized by the fact that the links (7) of the deformable parallelograms which couple the heads (5, 6) of the piston are articulated by their end (8) to supports (9, 10) in which are housed rods (21) of the heads (5, 6) of the piston.

5. The divider according to claims 1 and 4, characterized by the fact that the gear wheels (20) are centered with the ends (8) of the links (7) on the supports (9, 10) of the rods (21) of the heads of the piston.

6. The divider according to claim 4, characterized by the fact that the rods (21) of the heads (5, 6) of the piston are retained in their respective supports (9, 10) by means of screws (22).

7. The divider according to claims 1 and 4, characterized by the fact that the parts (28–30) of the piston serving as stops are formed by stop carriers (28, 29) fixed respectively to the supports (9, 10) and provided with an adjusting screw (30) which bears against the flat internal wall (31) of a cavity (32) provided in the rotor (3).

8. The divider according to claim 1, characterized by the fact that the graduated strips (34) past which the pointers (33) move are fixed against the front flat face of the rotor (3).

9. The divider according to claim 1, characterized by the fact that the flap (41) is fixed to a flange (39) by bolts (40) on one or the other side of the cylindrical lower base of the casing (2).

Fig.1

Fig. 2